# EUROPÄISCHE PATENTSCHRIFT

(11) **EP 2 386 366 B1**
(45) Veröffentlichungstag und Bekanntmachung des Hinweises auf die Patenterteilung: **24.08.2016**
(21) Anmeldenummer: 11156928.1
(22) Anmeldetag: 04.03.2011
(51) Int. Cl.: B22D 2/00, B22D 11/18, B22D 11/20, C22B 9/18, G01F 23/28, G01S 13/08, B22D 23/10

(54) **Verfahren und Vorrichtung zur kontinuierlichen Erfassung des Schlackenniveaus in Elektroschlacke-Umschmelzanlagen mit kurzen Gleitkokillen**
Method and device for continuous detection of the slag level in electroslag melting assemblies with short slide moulds
Procédé et dispositif d'établissement continu du niveau de scories dans des installations de refusion par laitier électrique à l'aide de lingotières courtes

(30) Priorität: 14.05.2010 AT 8072010
(43) Veröffentlichungstag der Anmeldung: 16.11.2011
(73) Patentinhaber: Inteco special melting technologies GmbH, 8600 Bruck/Mur (AT)
(72) Erfinder: Holzgruber, Harald, 8600, Bruck a.d. Mur (AT); Leber, Martin, 8642, St. Lorenzen im Mürztal (AT)
(74) Vertreter: Wagner, Kilian

(56) Entgegenhaltungen:
- EP-A1- 0 995 523
- EP-A2- 0 672 486
- EP-A2- 1 925 681
- DE-A1- 3 003 082
- US-A- 5 588 324
- US-B1- 6 321 829

## Beschreibung

Bei Elektroschlacke-Umschmelzanlagen (die auch als "ESU-Anlagen" bezeichnet werden) in kurzen Gleitkokillen ist es erforderlich, dass das Niveau des Schlackenspiegels, das heißt das Niveau des geschmolzenen Metallspiegels, in Bezug auf die Oberkante der wassergekühlten Kokille annähernd konstant gehalten wird, um eine thermische Überlastung bzw. eine Beschädigung der Anlage zu vermeiden. Dies wird je nach Anlagentyp dadurch erreicht, dass entsprechend der Abschmelzrate eines Abschmelzblocks, der umgeschmolzene Abschmelzblock kontinuierlich oder schrittweise entweder aus einer in einer ortsfesten Position eingebauten Kokille nach unten abgezogen wird, oder dass die Kokille bei einem auf einer feststehenden Bodenplatte aufgebauten Abschmelzblock nach oben abgezogen wird. In beiden Fällen kommt es zu einer Relativbewegung zwischen der Kokillenwand und der Oberfläche des Abschmelzblocks in der Weise, dass der Abschmelzblock aus der Kokille nach unten abgezogen wird.

Da es sich beim Elektroschlacke-Umschmelzen bei den üblichen Umschmelzraten um einen langsam ablaufenden Prozeß handelt, mit Aufbaugeschwindigkeiten eines aus dem abgeschmolzenen Metalls gebildeten, erstarrten Gussblocks zwischen 10 - 15 mm/Min (bei kleinen Gussblöcken von 300 mm Blockdurchmesser und darunter) und 1,5 - 3 mm/Min bei großen Blöcken mit 1000 mm Blockdurchmesser und darüber, war es insbesondere bei offenen Umschmelzanlagen, das heißt Umschmelzanlagen ohne Deckel möglich, das Niveau des Schlackenspiegels durch visuelle Kontrolle bei fest eingestellten, von Zeit zu Zeit nachjustierten Abzugsraten mit ausreichender Sicherheit konstant zu halten.

Um den erhöhten Qualitätsanforderungen an die Umschmelzprodukte gerecht werden zu können, werden heute Elektroschlacke-Umschmelzanlagen praktisch ausschließlich als geschlossene Anlagen mit Schutzgashaube ausgeführt, so dass keine einfache visuelle Kontrollmöglichkeit mehr möglich ist. Indirekte Methoden zur Kontrolle des Schlackenspiegels, wie die Berechnung des Schlackenspiegelniveaus aus der abgeschmolzenen Metallmenge des Abschmelzblocks im Vergleich mit der Abzugsgeschwindigkeit des Gussblocks sind zwar hilfreich aber nicht ausreichend, sodass immer noch von Zeit zu Zeit die Schutzgashaube angehoben werden muss, um eine zusätzliche visuelle Kontrolle durchführen zu können. Mit dieser Methode ist es grundsätzlich möglich, das Niveau des Schlackenspiegels in ausreichender Weise zu kontrollieren, so lange keine Störungen im Prozeßablauf eintreten. Nachteilig bei diesem Verfahren nach dem Stand der Technik ist, dass die Schutzgaswirkung gestört und ein Lufteintritt in den Raum oberhalb der Schlacke ermöglicht wird, was aus Gründen der Gussqualität nicht erwünscht ist.

Darüber hinaus ist es nachteilhaft, dass Störungen, die eine abrupte Änderung des Schlackenniveaus bewirken, durch die oben geschilderte Arbeitsweise nicht zeitgerecht erkannt werden können. Es kann dies beispielweise ein Schlacken- oder Stahlausbruch sein, der meist langsam beginnt, dann aber zum Auslaufen des gesamten Schlackenbads und eines Teils des Metallsumpfes führen kann. In diesem Fall kommt es zu einem raschen Absinken des Schlackenspiegels. Es kann dies aber auch bei einer Störung des Reglers sein, der die Eintauchtiefe der Elektrode in das Schlackenbad konstant hält. Im Falle eines zu tiefen Eintauchens der Elektrode kann dies ein unkontrolliertes Ansteigen des Schlackenspiegels zur Folge haben.

Weiterhin kann es auch erwünscht sein, das Niveau des Schlackenspiegels von Abschmelzblock zu Abschmelzblock unterschiedlich einzustellen, oder aber das Niveau des Schlackenspiegels gezielt innerhalb gewisser Grenzen schwanken zu lassen, um dadurch die Lebensdauer der Kokille zu erhöhen. Dies ist mit den derzeit zur Verfügung stehenden Kontrollmethoden nicht möglich.

Aus der DE 30 03 082 A1 ist ein Verfahren bzw. eine Vorrichtung zum Elektroschlacke-Umschmelzen in kurzen Gleitkokillen nach dem Oberbegriff der Ansprüche 1 und 3 bekannt. Die dort verwendete Messeinrichtung nutzt zur Erfassung des Niveaus der Oberfläche des Schlackenbades eine elektrische Schaltung unter Verwendung elektro-technischer Messgrößen.

Aus der EP 0 995 523 A1, der EP 0 672 486 A2 und der US 5,588,324 sind Messeinrichtungen insbesondere auf Radarbasis bekannt, bei denen diese oberhalb des Schlackenbades angeordnet sind. Wesentlich dabei ist, dass die dort gezeigten Messeinrichtungen insbesondere für Elektroschlacke-Umschmelzanlagen verwendet werden, mit denen Aluminium-, Magnesium- und Kupferlegierungen verarbeitet bzw. hergestellt werden. Diese genannten Materialien zeichnen sich gegenüber Eisen- und Nickelbasislegierungen durch geringere Schlackentemperaturen aus. Die aus den zuletzt genannten Schriften bekannte Anordnung der Messeinrichtung oberhalb des Schlackenspiegels führt daher bei der Verwendung bzw. der Herstellung von Eisenund Nickelbasislegierungen zu einer hohen thermischen Belastung der Messeinrichtung.

Aufgabe der Erfindung ist es daher, ausgehend von dem oben genannten Stand der Technik ein Verfahren zum Elektroschlacke-Umschmelzen in kurzen Gleitkokillen sowie eine entsprechende Elektroschlacke-Umschmelzanlage derart weiterzubilden, dass die Messeinrichtung thermisch weniger beansprucht wird. Ferner ist es Aufgabe der Erfindung, nicht nur in offenen, sondern insbesondere auch in durch eine Schutzgashaube geschlossenen Umschmelzanlagen das Niveau des Schlackenspiegels kontinuierlich zu erfassen und im Zusammenwirken mit den Regeleinrichtungen der Anlagen bzw. dem Bedienungspersonal folgende Funktionen automatisch einzuleiten bzw. kontinuierlich zu erfüllen:
➢ Beginn des Blockabzugs (Gussblock) bei Erreichen eines definierten Sollniveaus des Schlackenspiegels
➢ Kontrolle des Sollniveaus des Schlackenspiegels während der Phase des Blockabzugs bzw. Steuerung des Blockabzugs, um das Soliniveau des Schlackenspiegels einzuhalten
➢ Überwachung des störungsfreien Umschmelzvorgangs
➢ Steuerung einer gewollten, kontrollierten Niveauschwankung des Schlackenspiegels während des Umschmelzens

Ein weiteres Ziel ist das unverzügliche Erkennen von Störungen, die eine vergleichsweise rasche Änderung des Schlackenniveaus bewirken wie
➢ Ausbruch von Schlacke und/oder Metall, verbunden mit einem raschen Absinken des Niveaus
➢ zu tiefes Eintauchen der Elektrode während des Umschmelzens oder insbesondere nach einem Elektrodenwechsel, verbunden mit einem unerwarteten Ansteigen des Niveaus

Bei Versuchen hat es sich gezeigt, dass die obigen Ziele erfindungsgemäß am besten durch Einsatz einer an sich bekannten Radarmeßsonde erreicht werden können.

Bei der Erfindung handelt es sich demnach um ein Verfahren zur kontinuierlichen Kontrolle des Schlackenspiegels in ESU-Anlagen mit kurzen Gleitkokillen mit den kennzeichnenden Merkmalen der kontinuierlichen Messung des Schlackenniveaus in Bezug auf die Kokillenoberkante mittels einer in den Kokillendeckel oder die Schutzgashaube eingebauten, an sich bekannten Radarsonde durch einen im wesentlichen vertikal auf die Schlackenoberfläche gerichteten Radarstrahl und die Verwendung des erhaltenen Signals für die automatische Steuerung des Blockabzugs in der Weise, dass die Position des Schlackenspiegels in der Kokille konstant bleibt oder innerhalb bestimmter Grenzen gezielt schwankt.

Weiterhin ermöglicht die erfindungsgemäße Arbeitsweise ein unverzügliches Erkennen abrupter und markanter Änderungen des Schlackenspiegels und die Auslösung eines Alarms bzw. die automatische Einleitung von Korrekturmaßnahmen durch eine übergeordnete Steuerung.

Für die Durchführung des oben beschriebenen Verfahrens ist erfindungsgemäß eine an einen Kokillendeckel oder eine Schutzgashaube angebaute, allenfalls in einem wassergekühlten Schirmungsgehäuse eingebaute Radarmeßsonde vorgesehen mit einem Meßrohr, durch welches der Radarstrahl so gelenkt wird, dass er annähernd senkrecht auf die Oberfläche des Schlackenbades auftrifft. Das dadurch erhaltene Signal bzw. Schlackenniveau kann dann auf einem Instrument oder Bildschirm angezeigt oder dargestellt werden.

Zusätzlich kann das erhaltene Signal als Eingangssignal für die Steuerung des Blockabzugs aus der Kokille verwendet werden bzw. im Falle abrupter und markanter Änderungen des Niveaus des Schlackenspiegels oder bei Über- oder Unterschreiten bestimmter Grenzen für die Auslösung eines Alarms.

Die Erfindung wird nachfolgend anhand eines Ausführungsbeispiels sowie der Zeichnung beschrieben.

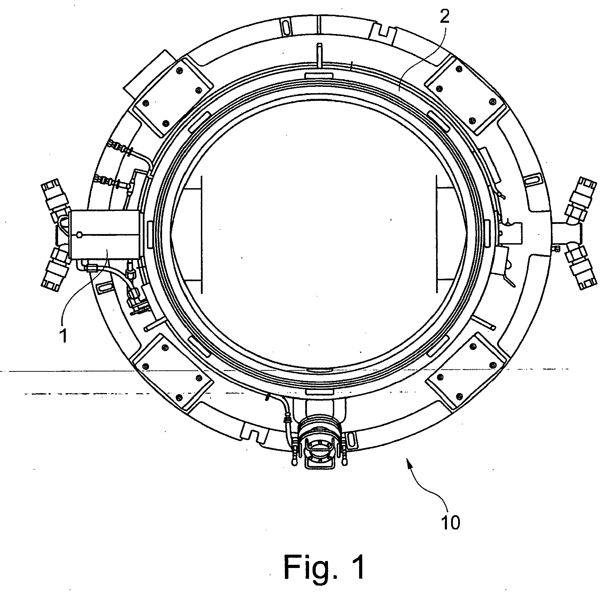

In der Fig. 1 ist in Draufsicht ein Beispiel für eine mögliche Anordnung einer verdeckt angeordneten Radarmeßsonde 3 in einem wassergekühlten Schirmungsgehäuse 1 dargestellt, welches an einen ebenfalls wassergekühlten Kokillendeckel 2 einer ESU-Anlage 10 angeflanscht ist.

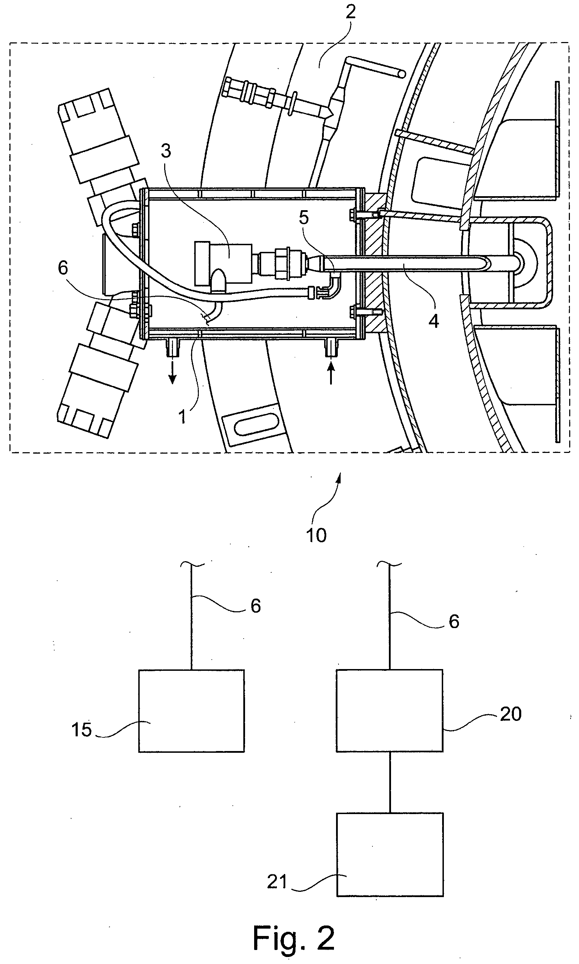

In der Fig. 2 ist in der Draufsicht in teilweise geschnittener Darstelllung das an dem Kokillendeckel 2 angeflanschte Schirmungsgehäuse 1 mit einer darin angeordneten Radarmesssonde 3 und einem oberhalb des Kokilleninnenraums geführten, gekrümmten Meßrohrs 4 mit einem Spülanschluß 5 für eine Gasspülung und eine angedeutete Leitung 6 für eine Stromversorgung der Radarmesssonde 3 und die Übertragung von Meßsignalen. Weiterhin ist erkennbar, dass die Leitung 6 mit einem Auswertegerät 15 verbunden ist, das das von der Radarmesssonde 3 ermittelte Niveau der Oberfläche 11 anzeigt bzw. darstellt. Alternativ oder zusätzlich hierzu kann die Leitung 6 auch mit einer Steuereinrichtung 20 der ESU-Anlage 10 verbunden sein. Die Steuereinrichtung 20 hält das Niveau der Oberfläche 11 des Schlackenbads 9 entweder konstant oder lässt es periodisch gezielt innerhalb vorbestimmter Grenzen schwanken. Ferner kann die Steuereinrichtung 20 mit einer Alarmeinrichtung 21 verbunden sein, die bei Über- oder Unterschreiten der Grenzen des Niveaus der Oberfläche (11) einen Alarm auslöst.

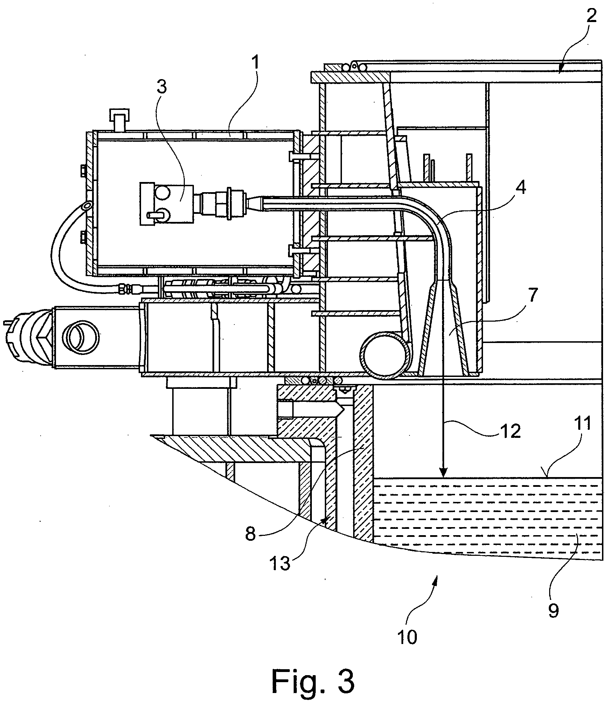

Die Fig. 3 zeigt einen vertikalen Schnitt durch das Schirmungsgehäuse 1 mit der Radarmesssonde 3 und dem gekrümmtem Meßrohr 4, welches in eine konisch ausgebildete Hornantenne 7 übergeht. Man erkennt weiterhin eine Innenwand 8 der wassergekühlten Gleitkokille 13 sowie die Oberfläche 11 des Schlackenbads 9 (Metallspiegel). Angedeutet ist weiterhin ein von der Radarmesssonde 3 erzeugter Radarstrahl 12, der vorzugsweise zumindest annähernd senkrecht auf die Oberfläche 11 auftrifft.

Das Schirmungsgehäuse 1 ist im dargestellten Ausführungsbeispiel als Doppelmantelgehäuse ausgeführt, und ermöglicht eine Wasserkühlung. Das Schirmungsgehäuse 1 kann zusätzlich optional mit einer MU-Metallschicht versehen sein, um elektromagnetische Felder abzuschirmen. Unter einer MU-Metallschicht wird dabei eine weichmetallische Legierung verstanden, die eine relativ hohe Permeabilität aufweist. Insbesondere kann die MU-Metallschicht ca. 75-80% Nickel, 15% Eisen und etwa 3-4% Kupfer, Cobalt und/oder Molybdän enthalten.

## Patentansprüche

1. Verfahren zum Elektroschlacke-Umschmelzen in kurzen Gleitkokillen (13), bei denen das Niveau der Oberfläche (11) eines Schlackenbades (9) in einer ESU-Kokille (13) mittels einer Messeinrichtung überwacht wird,
**dadurch gekennzeichnet,**
**dass** die Messeinrichtung eine Radarmesssonde (3) umfasst, deren Radarstahl (12) das Niveau der Oberfläche (11) des Schlackenbades (9) erfasst, wobei der Radarstrahl (12) von der in einen Kokillendeckel (2) oder eine Schutzgashaube der Elektroschlacke-Umschmelzanlage (10) eingebauten Radarmesssonde (3) emittiert wird und der Radarstrahl (12) durch ein an der Radarmesssonde (3) angebrachtes, gekrümmtes Messrohr (4) so geführt und umgelenkt wird, dass er annähernd senkrecht auf die Oberfläche (11) des Schlackenbades (9) auftrifft und das ermittelte Niveau der Oberfläche (11) durch ein Auswertegerät (15) angezeigt bzw. dargestellt wird und/oder als Eingangssignal für eine Steuereinrichtung (20) eines Blockabzugs aus der Gleitkokille (13) in der Weise verwendet wird, dass das Niveau der Oberfläche (11) des Schlackenbades (9) während des Umschmelzvorgangs entweder konstant gehalten wird oder periodisch gezielt innerhalb bestimmter Grenzen schwankt.

2. Verfahren nach Anspruch 1,
**dadurch gekennzeichnet,**
**dass** bei abrupten, markanten Änderungen des Niveaus der Oberfläche (11) des Schlackenbades (9) oder bei Über- oder Unterschreiten bestimmter festgelegter Grenzen des Niveaus der Oberfläche (11) des Schlackenbades (9) ein Alarm ausgelöst wird.

3. Elektroschlacke-Umschmelzanlage (10) zum Durchführen eines Verfahrens nach einem der Ansprüche 1 und 2, mit einem Kokillendeckel (2) oder einer Schutzgashaube zum Abdecken eines Schlackenbads (9),
**dadurch gekennzeichnet,**
**dass** an dem Kokillendeckel(2) oder der Schutzgashaube eine Radarmesssonde (3) zum Erfassen des Niveaus der Oberfläche (11) des Schlackenbades (9) angeordnet ist, deren Radarstrahl (12) durch ein an der Radarmesssonde (3) angebrachtes, gekrümmtes Messrohr (4) so geführt und umgelenkt wird, dass er annähernd senkrecht auf die Oberfläche (11) des Schlackenbades (9) auftrifft.

4. Elektroschlacke-Umschmelzanlage nach Anspruch3,
**dadurch gekennzeichnet,**
**dass** ein Auswertegerät (15) vorgesehen ist, dass das Niveau der Oberfläche (11) des Schlackenbades (9) anzeigt bzw. darstellt.

5. Verfahren zur Verwendung einer Elektroschlacke-Umschmelzanlage nach einem der Ansprüche 3 und 4, **dadurch gekennzeichnet,**
**dass** das Signal der Radarmesssonde (3) einer Steuereinrichtung (20) zugeführt wird, die das Signal als Eingangssignal für den Blockabzug aus der Gleitkokille (13) verwendet.

6. Verfahren zur Verwendung nach Anspruch 5,
**dadurch gekennzeichnet,**
**dass** die Steuereinrichtung (20) im Falle abrupter und markanter Änderungen des Niveaus der Oberfläche (11) oder bei Über- oder Unterschreiten bestimmter voreingestellter Grenzen des Niveaus der Oberfläche (11) eine Alarmeinrichtung (21) aktiviert.

## Claims

1. A method for electroslag remelting in short slide moulds (13), in which the level of the surface (11) of a slag bath (9) in an ESR mould (13) is monitored by means of a measuring device,
**characterized in that**
the measuring device comprises a radar measuring probe (3), the radar beam (12) of which detects the level of the surface (11) of the slag bath (9), wherein the radar beam (12) is emitted by the radar measuring probe (3) incorporated into a mould cover (2) or a protective gas hood of the electroslag remelting installation (10), and the radar beam (12) is directed and deflected through a curved measuring tube (4), arranged on the radar measuring probe (3), so that it strikes approximately vertically onto the surface (11) of the slag bath (9) and the determined level of the surface (11) is displayed or respectively represented by an evaluation apparatus (15) and/or is used as input signal for a control device (20) of an ingot withdrawal from the slide mould (13) such that the level of the surface (11) of the slag bath (9) during the remelting process is either kept constant or fluctuates periodically in a targeted manner within specific limits.

2. The method according to Claim 1,
**characterized in that**
an alarm is triggered in the case of abrupt, marked changes to the level of the surface (11) of the slag bath (9) or in the case of exceeding or falling below specific defined limits of the level of the surface (11) of the slag bath (9).

3. An electroslag remelting installation (10) for carrying out a method according to one of Claims 1 and 2, with a mould cover (2) or a protective gas hood for covering a slag bath (9),
**characterized in that**
on the mould cover (2) or the protective gas hood a radar measuring probe (3) is arranged for detecting the level of the surface (11) of the slag bath (9), the radar beam (12) of which is directed and deflected through a curved measuring tube (4), arranged on the radar measuring probe (3), so that it strikes approximately vertically onto the surface (11) of the slag bath (9).

4. The electroslag remelting installation according to Claim 3,
**characterized in that**
an evaluation apparatus (15) is provided, which displays or respectively represents the level of the surface (11) of the slag bath (9).

5. A method for use of an electroslag remelting installation according to one of Claims 3 and 4,
**characterized in that**
the signal of the radar measuring probe (3) is delivered to a control device (20) which uses the signal as input signal for the ingot withdrawal from the slide mould (13).

6. The method for use according to Claim 5,
**characterized in that**
in the case of abrupt and marked changes to the level of the surface (11) or in the case of exceeding or falling below specific preset limits of the level of the surface (11), the control device (20) activates an alarm device (21).

## Revendications

1. Procédé de refonte sous laitier électro conducteur en courtes lingotières coulissantes (13), dans lequel le niveau de la surface (11) d'un bain de laitier (9) dans une lingotière ESU (13) est surveillé au moyen d'un dispositif de mesure, **caractérisé en ce que** le dispositif de mesure comporte une sonde de mesure radar (3) dont le faisceau radar (12) saisit le niveau de la surface (11) du bain de laitier (9), dans lequel le faisceau radar (12) est émis par la sonde de mesure radar (3) incorporée dans un couvercle (2) de lingotière, ou par un capot de gaz protecteur de l'installation (10) de refonte sous laitier électro conducteur, ledit faisceau radar (12) étant guidé et dévié par un tube de mesure (4) courbé placé sur la sonde de mesure radar (3) de telle sorte qu'il aboutisse sensiblement à la perpendiculaire sur la surface (11) du bain de laitier (9) et permette l'affichage ou la représentation sur un appareil d'évaluation (15) du niveau de la surface (11) ainsi déterminé et/ou soit utilisé comme signal d'entrée pour un dispositif de commande (20) d'une extraction de bloc hors de la lingotière coulissante (13), de telle sorte que le niveau de la surface (11) du bain de laitier (9) soit maintenu constant pendant l'opération de refonte ou varie périodiquement de manière contrôlée à l'intérieur de limites définies.

2. Procédé selon la revendication 1, **caractérisé en ce qu'**une alarme est déclenchée en cas de modification abrupte et marquée du niveau de la surface (11) du bain de laitier (9) ou en cas de dépassement ou de non-atteinte de certaines limites définies du niveau de la surface (11) de bain de laitier (9).

3. Installation (10) de refonte sous laitier électro conducteur en vue de la mise en oeuvre d'un procédé selon l'une des revendications 1 et 2 et présentant un couvercle (2) de lingotière ou un capot de gaz protecteur recouvrant un bain de laitier (9), **caractérisée en ce qu'**une sonde de mesure radar (3) destinée à saisir le niveau de la surface (11) du bain de laitier (9) est disposée sur le couvercle (2) de lingotière ou sur le capot de gaz protecteur, ledit faisceau radar (12) est guidé et dévié par un tube de mesure (4) courbe placé sur la sonde de mesure radar (3) de telle sorte que le faisceau radar aboutisse sensiblement à la perpendiculaire sur la surface (11) du bain de laitier (9).

4. Installation de refonte sous laitier électro conducteur selon la revendication 3, **caractérisée en ce qu'**un appareil d'évaluation (15) est prévu pour afficher ou représenter le niveau de la surface (11) du bain de laitier (9).

5. Procédé d'utilisation d'une installation de refonte sous laitier électro conducteur selon l'une des revendications 3 et 4, **caractérisé en ce que** le signal de la sonde de mesure radar (3) est amené à un dispositif de commande (20) qui utilise le signal comme signal d'entrée pour l'extraction de bloc hors de la lingotière coulissante (13).

6. Procédé d'utilisation selon la revendication 5, **caractérisé en ce que** le dispositif de commande (20) active un dispositif d'alarme (21) en cas de modification abrupte et marquée du niveau de la surface (11) ou en cas de dépassement ou de non-atteinte de certaines limites pré-réglées du niveau de la surface (11).
